# EUROPÄISCHE PATENTSCHRIFT

(11) **EP 2 616 282 B1**
(45) Veröffentlichungstag und Bekanntmachung des Hinweises auf die Patenterteilung: **18.06.2014**
(21) Anmeldenummer: 11743195.7
(22) Anmeldetag: 10.08.2011
(51) Int. Cl.: H04N 5/225, B60R 11/04

(54) **KAMERAANORDNUNG FÜR EIN FAHRZEUG UND VERFAHREN ZUM EINBAU EINER KAMERAANORDNUNG IN EIN FAHRZEUG**
CAMERA ARRANGEMENT FOR A VEHICLE AND METHOD FOR INSTALLING A CAMERA ARRANGEMENT IN A VEHICLE
DISPOSITIF DE CAMÉRA POUR UN VÉHICULE ET PROCÉDÉ POUR LE MONTAGE D'UN DISPOSITIF DE CAMÉRA SUR UN VÉHICULE

(30) Priorität: 13.09.2010 DE 102010045214
(43) Veröffentlichungstag der Anmeldung: 24.07.2013
(73) Patentinhaber: Audi AG, 85045 Ingolstadt (DE)
(72) Erfinder: LIEPOLD, Thomas, 85080 Gaimersheim (DE); BÖHM, Günther, 85137 Walting (DE)
(86) Internationale Anmeldenummer: PCT/EP2011/003987
(87) Internationale Veröffentlichungsnummer: WO 2012/034621

(56) Entgegenhaltungen:
- EP-A2- 1 332 923
- EP-B1- 1 648 737
- DE-A1-102009 008 283
- DE-A1-102009 056 200
- JP-A- 4 024 137
- JP-A- 2001 058 543
- US-A1- 2006 171 704

## Beschreibung

Derartige Kameraanordnungen werden in die Karosserie von Fahrzeugen integriert, um eine komfortable Beobachtung des Fahrzeugumfelds, insbesondere des rückwärtigen Bereiches des Fahrzeugs, für den Fahrer zu gewährleisten. Dies geschieht vorzugsweise durch eine filmische Wiedergabe des von der Kamera erfassten Bildes auf einen im Fahrzeuginnenraum angebrachten Monitor.

Die DE 10 2008 010 966 A1 offenbart eine Anordnung für ein Fahrzeug mit einer Entriegelungsvorrichtung zum Entriegeln eines Bauteils des Fahrzeugs, wobei die Entriegelungsvorrichtung ein Abdeckelement umfasst, welches aus einer Ruhestellung heraus in eine geöffnete Stellung schwenkbar ist. Hinter dem Abdeckelement ist eine Kamera angeordnet, mit der in einer aktiven Stellung ein Umgebungsbereich des Fahrzeugs erfassbar ist. Die Kamera ist in einer geöffneten Stellung des Abdeckelements unabhängig von dem Abdeckelement zwischen einer inaktiven und der aktiven Stellung über eine Kulissenführung bewegbar gelagert. Nachteilig ist, dass die Kulissenführung zur Bewegung der Kamera einen erhöhten Bauraumbedarf hat. Weiterhin gestaltet sich die Abdichtung des Bauraums der Kamera bei geöffnetem Abdeckelement als schwierig und kostenintensiv.

Die DE 10 2007 052 402 A9 beschreibt eine Vorrichtung mit einer Kameraeinheit, die zur Bilderfassung des Außenbereiches eines Kraftfahrzeuges dient, und einem Deckelelement, das über einen Antrieb von einer Schließstellung in eine Offenstellung bewegbar ist. In der Schließstellung des Deckelelementes befindet sich die Kameraeinheit von außen unzugänglich hinter dem Deckelelement. Die Kameraeinheit ist zu einer Aufnahmerichtung ausgerichtet, bei der in der Offenstellung des Deckelelementes die Bilderfassung durchführbar ist. Der Antrieb wirkt mit einem derartigen Mechanismus zusammen, dass während der Bewegung von der Schließstellung in die Offenstellung das Deckelelement eine zweiphasige Bewegung ausführt. Als Nachteil ist hierbei zu nennen, dass der Mechanismus zum zweiphasigen Bewegen des Deckels aufwändig und dementsprechend teuer ist.

Die EP 1 648 737 B1 zeigt eine Vorrichtung zum Rückwärtssehen für ein Kraftfahrzeug, mit einer zur festen Integration im Heck eines Kraftfahrzeugs bestimmten Videokamera, einer mobil zwischen einer Verschlussposition und einer Öffnungsposition angebrachten Klappe, wobei die Klappe jeweils vor und beabstandet von dem Objektiv der Videokamera angebracht ist. Zum Antreiben der Klappe in der Verschiebung zwischen der Verschlussposition und der Öffnungsposition sind Antriebsmittel vorgesehen, wobei die Klappe eine Schwenkachse definierende und den Durchgang von einer Position zur anderen erlaubende Schwenkmittel umfasst. Die Klappe hat einen gekrümmten Teil und Gelenkarme, wobei die Gelenkarme fest mit dem gekrümmten Teil und den Schwenkmitteln verbunden sind. Nachteilig an dieser Vorrichtung ist, dass die Klappenkinematik aufwändig und filigran aufgebaut ist.

Das Dokument US 2006 01 71 704 A1 offenbart eine schwenkbare Kameraeinheit ohne eine Verschlusskappe zur Abdichtung eine Kammer.

Die gattungsbildende DE 103 51 363 A1 offenbart eine Kameraanordnung für Kraftfahrzeuge mit einer Kameraeinheit zur Bilderfassung, wobei die Kameraeinheit in einer nicht aktiven Position von außen im wesentlichen unzugänglich hinter einem schwenkbaren Schutzelement angeordnet ist. Dabei ist die Kameraeinheit auf dem Schutzelement angeordnet und mit diesem schwenkbar, wobei das Schutzelement mit der darauf angeordneten Kameraeinheit aus der die Kameraeinheit verdeckenden Stellung, in der die Kameraeinheit sich in der nicht aktiven Position befindet, in eine Stellung schwenkbar ist, in der die Kameraeinheit sich in einer aktiven Position zur Bilderfassung befindet. Nachteilig ist, dass eine derartige Kameraanordnung mangelnde Dichtungseigenschaften in der aktiven Position hat, wodurch Feuchtigkeit in das Innere der Anordnung eindringen und zu Korrosionsschäden führen könnte.

Aufgabe der vorliegenden Erfindung ist es daher eine vor Vandalismus und Witterung geschützt angeordnete, kompakte und kostengünstige Kameraanordnung für ein Fahrzeug, sowie ein Verfahren zum Einbau einer derartigen Kameraanordnung in ein Fahrzeug, bereitzustellen.

Diese Aufgabe wird durch den Patentanspruch 1 bzw. 10 gelöst.

Kameraanordnung für ein Fahrzeug mit einer Kameraeinheit zur Bilderfassung, die in eine aktive und eine nicht aktive Stellung verschwenkbar ist, wobei die Kameraeinheit in der nicht aktiven Stellung von außen unzugänglich in einer Kammer untergebracht ist und in der aktiven Stellung zur optischen Erfassung eines Umgebungsbereichs aus der Kammer heraus geschwenkt ist, wobei die Kameraeinheit in der aktiven Stellung die Kammer abdichtet und wobei an der Kameraeinheit eine Verschlusskappe angeordnet ist, die in der nicht aktiven Stellung die Kammer abdichtet.

Indem die Verschlusskappe an der Kameraeinheit die Öffnung zur Kammer in der nicht aktiven Stellung und die Kameraeinheit die Öffnung in der aktiven Stellung verschließt, können in den beiden Endlagen der Kameraeinheit weder Partikel noch Feuchtigkeit in die Kammer eindringen und dort Korrosionsschäden verursachen. Zudem ist durch die Anbringung der Dichtungseinrichtungen an der Kameraeinheit ein kompakter und günstiger Aufbau einer Kameraanordnung möglich. Die Anlage der Dichtungseinrichtungen an den entsprechenden Bauteilen erfolgt zwangsläufig durch das Verschwenken der Kameraeinheit. Die Verschlusskappe kann an der Kameraeinheit angeformt oder als zusätzliches Bauteil an dieser befestigt sein. In der Kammer können ferner die zur Benutzung der Kameraeinheit notwendigen elektronischen Bauteile und der zum Verschwenken der Kameraeinheit benötigte Antrieb angeordnet sein. In der nicht aktiven Stellung kann die Kameraeinheit den Umgebungsbereich des Fahrzeugs nicht optisch erfassen. Zum Schutz der Kameraeinheit vor Vandalismus verbleibt diese in der Regel in der nicht aktiven Stellung. Nur wenn der Fahrzeugführer eine optische Anzeige des betreffenden Umgebungsbereichs des Fahrzeugs, beispielsweise zum leichteren Rangieren, wünscht, wird die Kameraeinheit in die aktive Stellung verschwenkt und die Bilderfassung aktiviert.

In einer bevorzugten Ausführung ist an der Kameraeinheit ein Rand ausgebildet, der die Kammer in der aktiven Stellung der Kameraeinheit abdichtet. In der aktiven Stellung der Kameraeinheit liegt der Rand derart an einem Randbereich der Kammer an, dass dieser gegen ein Eindringen von Partikeln und Feuchtigkeit geschützt ist. Der Rand verläuft zumindest teilweise um den Außenumfang der Kameraeinheit und ist vorzugsweise einteilig aus der Kameraeinheit ausgeformt.

In einer bevorzugten Ausführung ist eine optische Linse der Kameraeinheit zwischen Rand und Verschlusskappe angeordnet. Rand und Verschlusskappe stehen winklig zueinander, so dass sich deren gedachte Erstreckungsebenen kreuzen. Der Winkel zwischen beiden ist vorzugsweise ein spitzer Winkel, besonders bevorzugt ein Winkel um 45°. Die optische Linse ist zwischen den Ebenen von Rand und Verschlusskappe eingefasst, so dass die optische Linse in der nicht aktiven Stellung innerhalb der schützenden Kammer und in der aktiven Stellung außerhalb der Kammer liegt.

In einer bevorzugten Ausführung ist die Kameraeinheit von einem Spindelantrieb verschwenkbar. Ein Spindelantrieb ermöglicht eine besonders kompakte Antriebsbauform. Der Spindelantrieb wirkt mit einem auf der Kameraeinheit ausgebildeten, gezahnten Abschnitt in Form eines Schneckengetriebes zusammen.

In einer bevorzugten Ausführung verläuft die Schwenkachse durch die Kameraeinheit hindurch. Verläuft die Schwenkachse durch die Kameraeinheit hindurch, lässt sich die Bauform noch kompakter gestalten. Vorzugsweise verläuft die Schwenkachse parallel nahe zu einer vom Rand aufgespannten Ebene oder ist Teil einer solchen Ebene.

In einer bevorzugten Ausführung ist die Kammer in einem Gehäusemodul ausgebildet. Das Gehäusemodul fasst die Bauteile der Kameraanordnung zu einer einfach handhabbaren Baueinheit zusammen, so dass der Einbau in das Fahrzeug erleichtert wird. Das Gehäusemodul kann aus mehreren Untermodulen zusammengefügt werden. So können die Kameraeinheit, deren Antrieb und die elektronischen Schaltungen in einem Kameramodul angeordnet sein. Weitere Module, wie beispielsweise ein Betätigungsmodul mit einer Betätigungseinrichtung zur Entriegelung einer Klappe oder Tür, können modular angefügt werden.

In einer bevorzugten Ausführung ist das Gehäusemodul an einer Klappe oder Tür des Fahrzeugs befestigt. Die Klappe oder Tür dient zum wahlweisen verschließen einer Zugangsöffnung für den Fahrzeuginnenraum in der Karosserie. Als Klappe ist insbesondere eine Heckklappe angedacht, wodurch die Kameraeinheit die Funktion einer Rückfahrkamera erfüllt.

In einer bevorzugten Ausführung ist in dem Gehäusemodul eine Betätigungseinrichtung zum Betätigen der Klappe oder Tür aufgenommen. Wenn das Gehäusemodul zusätzlich eine Betätigungseinrichtung zum Entriegeln einer Klappe oder Tür aufnimmt, können beide Funktionen kostengünstig und einfach handhabbar in dem Gehäusemodul untergebracht werden. Soll in manchen Fällen keine Kameraeinheit verbaut werden, so lässt sich die Kammer im Kameramodul durch einen Blinddeckel am Betätigungsmodul verschließen.

In einer bevorzugten Ausführung ist die Verschlusskappe formschlüssig an der Kameraeinheit befestigt. Die formschlüssige Verbindung der Verschlusskappe mit der Kameraeinheit ermöglicht einen schnellen Zusammenbau.

Ein Verfahren zum Einbau einer Kameraanordnung in ein Fahrzeug umfasst folgende Schritte:
- Anordnen einer zwischen einer aktiven und einer nicht aktiven Stellung verschwenkbaren Kameraeinheit zur Bilderfassung in einem Kameramodul;
- Anordnen einer Betätigungseinrichtung zum Betätigen einer Klappe oder Tür des Fahrzeugs in einem Betätigungsmodul;
- Einführen des Betätigungsmoduls von außen in eine Karosserieöffnung der Klappe oder Tür;
- Anordnen des Kameramoduls an der Innenseite der Klappe oder Tür;
- Verbinden des Kameramoduls und des Betätigungsmoduls zu einem Gehäusemodul;
- Befestigen einer Verschlusskappe an der Kameraeinheit.

Der Einbau einer Kameraanordnung in ein Fahrzeug nach dem beschriebenen Verfahren hat den Vorteil, dass das wertvolle Kameramodul diebstahlsicher innerhalb der Klappe oder Tür angeordnet ist. Die Karosserieöffnung ist dabei gerade so groß gewählt, dass das Kameramodul nicht durch diese von außen entnommen werden kann. Das Kameramodul und das von außen eingebrachte Betätigungsmodul werden vorzugsweise durch Clips miteinander verbunden, die nicht zerstörungsfrei wieder gelöst werden können. Indem die Verschlusskappe in einem letzten Schritt an der Kameraeinheit befestigt wird, kann die Öffnung der Kammer, durch die die Kameraeinheit hindurch verschwenkt wird, möglichst eng um die Kameraeinheit herum verlaufen. Dies wirkt sich positiv auf die Dichtungseigenschaften der Verschlusskappe aus. Der Rand der Kameraeinheit dichtet in der aktiven Stellung vorzugsweise gegenüber dem Betätigungsmodul ab. Das Kameramodul kann zum leichteren Einbau der Kameraeinheit, des Antriebs und der elektronischen Komponenten wiederum aus zwei Gehäusehälften bestehen.

In einer bevorzugten Ausführung ist die Kameraeinheit beim Verbinden des Kameramoduls mit dem Betätigungsmodul in der nicht aktiven Stellung und beim Befestigen der Verschlusskappe an der Kameraeinheit in der aktiven Stellung.

Weitere Einzelheiten, Merkmale und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine Kameraanordnung in aktiver Stellung;
Fig. 2 eine Explosionsdarstellung einer Kameraanordnung;
Fig. 3 eine in eine Klappe oder Tür eingebaute Kameraanordnung.

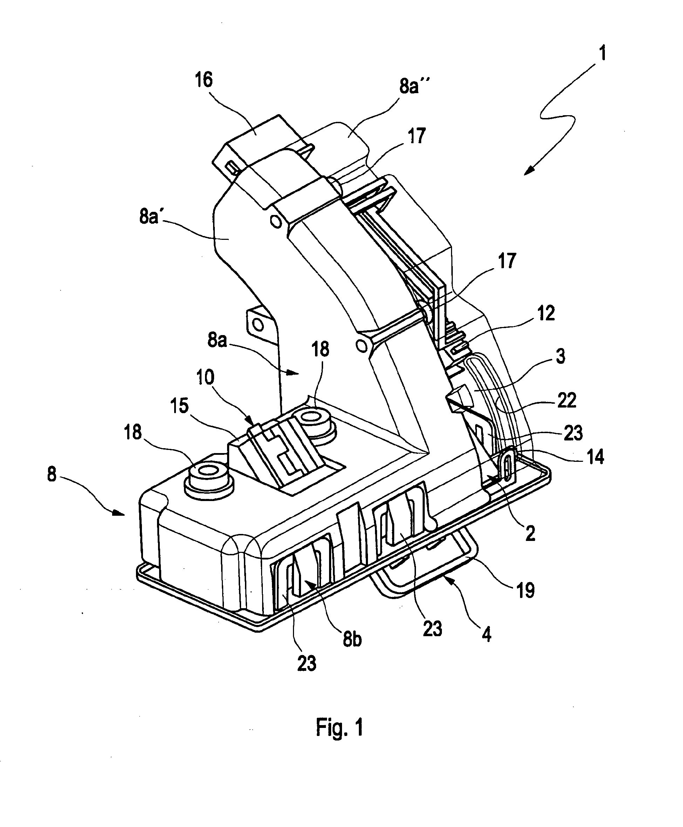

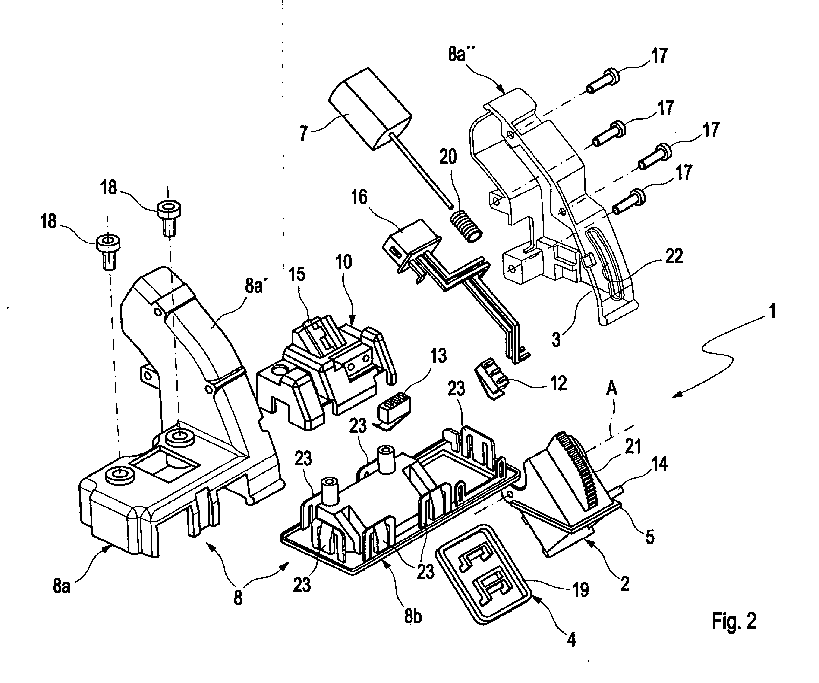

In Fig. 1 ist eine erfindungsgemäße Kameraanordnung 1 in aktiver Stellung dargestellt, während in Fig. 2 eben diese Kameraanordnung 1 detailliert in einer Explosionsdarstellung gezeigt ist. Das Gehäusemodul 8 besteht aus einem Kameramodul 8a und einem Betätigungsmodul 8b. Das Kameramodul 8a wiederum setzt sich aus zwei Gehäusehälften 8a' und 8a" zusammen. An das Betätigungsmodul 8b wird eine Betätigungseinrichtung 10 mit elektrischem Anschluss 15, sowie ein Betätigungsschalter 13 angebaut. Das Betätigungsmodul 8b besteht zumindest teilweise aus einer Weichkomponente, wobei der Betätigungsschalter 13 im Bereich dieser Weichkomponente angeordnet ist. Die Betätigung des Betätigungsschalters 13 löst eine Entriegelung einer Klappe oder Tür des Fahrzeugs aus. Die Kameraeinheit 2 ist in eine Kammer 3 des Kameramoduls 8a einzubauen. Die Kameraeinheit 2 ist um eine Schwenkachse A schwenkbar und wird über einen Führungszapfen 14 in einer Kulisse 22 der zweiten Gehäusehälfte 8a" geführt. Die im Wesentlichen kubisch ausgebildete Kameraeinheit 2 weist einen diagonal verlaufenden Rand 5 auf, der sich über drei der vier Seiten der Kameraeinheit 2 erstreckt. Im Bereich der Schwenkachse A ist kein Rand 5 vorgesehen. Auf der Unterseite der Kameraeinheit 2 kann eine Verschlusskappe 4 mit umlaufender Dichtlippe 19 formschlüssig befestigt werden. Auf der gegenüberliegenden Oberseite der Kameraeinheit 2 ist ein gezahnter Abschnitt 21 ausgebildet, der mit einer Spindel 20 eines ebenfalls in der Kammer 3 befindlichen Spindelantriebs 7 kämmt. In der Kammer 3 ist ein Kameraschalter 12 angeordnet, durch den die aktive und nicht aktive Stellung der Kameraeinheit 2 sensiert werden kann. Die elektrische Kontaktierung erfolgt durch den elektrischen Anschluss 16, der aus der Kammer 3 zur Außenseite des Kameramoduls 8a führt. Nach dem Einbau von Kameraeinheit 2, Kameraschalter 12, Spindelantrieb 7 und elektrischem Anschluss 16 werden die erste Gehäusehälfte 8a' und die zweite Gehäusehälfte 8a" über vier Schrauben 17 zu dem Kameramodul 8a verschraubt. Das Betätigungsmodul 8b und das Kameramodul 8a werden mit Clips 23 und Schrauben 18 zu dem Gehäusemodul 8 verbunden. In der aktiven Stellung liegt der Rand 5 der Kameraeinheit 2 an dem Betätigungsmodul 8b dichtend an und in der nicht aktiven Stellung liegt die Dichtlippe 19 der Verschlusskappe 4 an dem Betätigungsmodul 8b dichtend an.

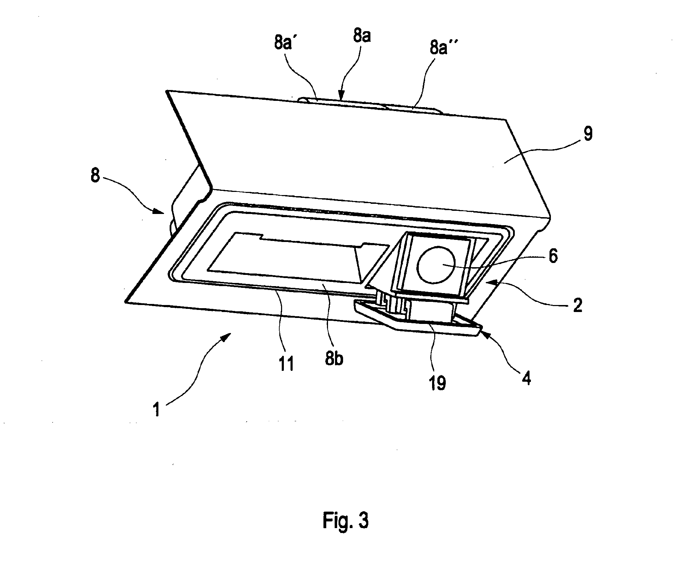

In Fig. 3 ist eine Kameraanordnung 1 nach dem Einbau in eine Klappe oder Tür 9 eines Fahrzeugs dargestellt. Dazu wird das aus der ersten 8a' und der zweiten Gehäusehälfte 8a" bestehende Kameramodul 8a von innerhalb der Klappe oder Tür 9 an die Karosserieöffnung 11 herangeführt und das Betätigungsmodul 8b von außen durch die Karosserieöffnung 11 in die Klappe oder Tür 9 eingeführt. Kameramodul 8a und Betätigungsmodul 8b werden miteinander verbunden und können so in beide Richtungen nicht mehr aus der Karosserieöffnung 11 entfernt werden. Zum Befestigen der Verschlusskappe 4 ist die Kameraeinheit 2 in die aktive Stellung verschwenkt. In der aktiven Stellung kann die optische Linse 6 einen Umgebungsbereich des Fahrzeugs erfassen. In der nicht aktiven Stellung liegt die Dichtlippe 19 der Verschlusskappe 4 dichtend an dem Betätigungsmodul 8b an.

### Liste der Bezugszeichen:

- A: Schwenkachse

- 1: Kameraanordnung
- 2: Kameraeinheit
- 3: Kammer
- 4: Verschlusskappe
- 5: Rand
- 6: optische Linse
- 7: Spindelantrieb
- 8: Gehäusemodul
- 8a: Kameramodul
- 8a': erste Gehäusehälfte
- 8a": zweite Gehäusehälfte
- 8b: Betätigungsmodul
- 9: Klappe oder Tür
- 10: Betätigungseinrichtung
- 11: Karosserieöffnung
- 12: Kameraschalter
- 13: Betätigungsschalter
- 14: Führungszapfen
- 15: elektrischer Anschluss
- 16: elektrischer Anschluss
- 17: Schraube
- 18: Schraube
- 19: Dichtlippe
- 20: Spindel
- 21: gezahnter Abschnitt
- 22: Kulisse
- 23: Clips

## Patentansprüche

1. Kameraanordnung (1) für ein Fahrzeug mit einer Kameraeinheit (2) zur Bilderfassung, die in eine aktive und eine nicht aktive Stellung verschwenkbar ist, wobei die Kameraeinheit (2) in der nicht aktiven Stellung von außen unzugänglich in einer Kammer (3) untergebracht ist und in der aktiven Stellung zur optischen Erfassung eines Umgebungsbereichs aus der Kammer (3) heraus geschwenkt ist, **dadurch gekennzeichnet, dass** die Kameraeinheit (2) in der aktiven Stellung die Kammer (3) abdichtet und dass an der Kameraeinheit (2) eine Verschlusskappe (4) angeordnet ist, die in der nicht aktiven Stellung die Kammer (3) abdichtet.

2. Kameraanordnung nach Anspruch 1, **dadurch gekennzeichnet, dass** an der Kameraeinheit (2) ein Rand (5) ausgebildet ist, der die Kammer (3) in der aktiven Stellung der Kameraeinheit (2) abdichtet.

3. Kameraanordnung nach Anspruch 1 oder 2, **dadurch gekennzeichnet, dass** eine optische Linse (6) der Kameraeinheit (2) zwischen Rand (5) und Verschlusskappe (4) angeordnet ist.

4. Kameraanordnung nach einem der Ansprüche 1 bis 3, **dadurch gekennzeichnet, dass** die Kameraeinheit (2) von einem Spindelantrieb (7) verschwenkbar ist.

5. Kameraanordnung nach einem der Ansprüche 1 bis 4, **dadurch gekennzeichnet, dass** die Schwenkachse (A) durch die Kameraeinheit (2) hindurch verläuft.

6. Kameraanordnung nach einem der Ansprüche 1 bis 5, **dadurch gekennzeichnet, dass** die Kammer (3) in einem Gehäusemodul (8) ausgebildet ist.

7. Kameraanordnung nach Anspruch 6, **dadurch gekennzeichnet, dass** das Gehäusemodul (8) an einer Klappe oder Tür (9) des Fahrzeugs befestigt ist.

8. Kameraanordnung nach Anspruch 6 oder 7, **dadurch gekennzeichnet, dass** in dem Gehäusemodul (8) eine Betätigungseinrichtung (10) zum Betätigen der Klappe oder Tür (9) aufgenommen ist.

9. Kameraanordnung nach einem der Ansprüche 1 bis 3, **dadurch gekennzeichnet, dass** die Verschlusskappe (4) formschlüssig an der Kameraeinheit (2) befestigt ist.

10. Verfahren zum Einbau einer Kameraanordnung (1) nach Anspruch 1 in ein Fahrzeug, umfassend die folgenden Schritte:
- Anordnen der zwischen einer aktiven und einer nicht aktiven Stellung verschwenkbaren Kameraeinheit (2) zur Bilderfassung in einem Kameramodul (8a);
- Anordnen einer Betätigungseinrichtung (10) zum Betätigen einer Klappe oder Tür (9) des Fahrzeugs in einem Betätigungsmodul (8b);
- Einführen des Betätigungsmoduls (8b) von außen in eine Karosserieöffnung (11) der Klappe oder Tür (9);
- Anordnen des Kameramoduls (8a) an der Innenseite der Klappe oder Tür (9);
- Verbinden des Kameramoduls (8a) und des Betätigungsmoduls (8b) zu einem Gehäusemodul (8);
- Befestigen der Verschlusskappe (4) an der Kameraeinheit (2).

11. Verfahren nach Anspruch 10, **dadurch gekennzeichnet, dass** die Kameraeinheit (2) beim Verbinden des Kameramoduls (8a) mit dem Betätigungsmodul (8b) in der nicht aktiven Stellung und beim Befestigen der Verschlusskappe (4) an der Kameraeinheit (2) in der aktiven Stellung ist.

## Claims

1. Camera arrangement (1) for a vehicle, comprising a camera unit (2) for image capture which can be pivoted into an active position and an inactive position, wherein in the inactive position the camera unit (2) is accommodated in a chamber (3) so as to be inaccessible from outside and in the active position the camera unit (2) is pivoted out of the chamber (3) for optically capturing a surrounding area, **characterised in that** in the active position the camera unit (2) seals the chamber (3) and **in that** a closure cap (4) which seals the chamber (3) in the inactive position is disposed on the camera unit (2).

2. Camera arrangement according to claim 1, **characterised in that** on the camera unit (2) is formed a rim (5) which seals the chamber (3) in the active position of the camera unit (2).

3. Camera arrangement according to claim 1 or 2, **characterised in that** an optical lens (6) of the camera unit is disposed between the rim (5) and the closure cap (4).

4. Camera arrangement according to one of claims 1 to 3, **characterised in that** the camera unit (2) is pivotable by means of a spindle drive (7).

5. Camera arrangement according to one of claims 1 to 4, **characterised in that** the pivot axis (A) extends through the camera unit (2).

6. Camera arrangement according to one of claims 1 to 5, **characterised in that** the chamber (3) is formed in a housing module (8).

7. Camera arrangement according to claim 6, **characterised in that** the housing module (8) is attached to a lid or door (9) of the vehicle.

8. Camera arrangement according to claim 6 or 7, **characterised in that** an operating device (10) for operating the lid or door (9) is accommodated in the housing module (8).

9. Camera arrangement according to one of claims 1 to 3, **characterised in that** the closure cap (4) is attached to the camera unit (2) by interlocking engagement.

10. Method for installing a camera arrangement (1) according to claim 1 in a vehicle, comprising the following steps:
- arranging the camera unit (2) which is pivotable between an active and an inactive position for image capture in a camera module (8a);
- arranging an operating device (10) for operating a lid or door (9) of the vehicle in an operating module (8b);
- inserting the operating module (8b) from outside into a bodywork opening (11) of the lid or door (9);
- arranging the camera module (8a) on the inside of the lid or door (9);
- connecting the camera module (8a) and the operating module (8b) to form a housing module (8);
- attaching the closure cap (4) to the camera unit (2).

11. Method according to claim 10, **characterised in that** the camera unit (2) is in the inactive position when the camera module (8a) is connected to the operating module (8b) and is in the active position when the closure cap (4) is attached to the camera unit (2).

## Revendications

1. Dispositif de caméra (1) pour un véhicule avec une unité de caméra (2) pour la prise d'image qui peut être pivotée dans une position active et une position inactive, l'unité de caméra (2) étant logée dans la position inactive de manière à ne pas être accessible de l'extérieur dans une chambre (3) et étant pivotée hors de la chambre (3) dans la position active pour la prise optique d'une zone ambiante, **caractérisé en ce que** l'unité de caméra (2) obture la chambre (3) dans la position active et **en ce qu'**un capuchon (4) est disposé sur l'unité de caméra (2), lequel obture la chambre (3) dans la position inactive.

2. Dispositif de caméra selon la revendication 1, **caractérisé en ce qu'**un bord (5) est réalisé sur l'unité de caméra (2), lequel obture la chambre (3) dans la position active de l'unité de caméra (2).

3. Dispositif de caméra selon la revendication 1 ou 2, **caractérisé en ce qu'**une lentille optique (6) de l'unité de caméra (2) est disposée entre le bord (5) et le capuchon (4).

4. Dispositif de caméra selon l'une quelconque des revendications 1 à 3, **caractérisé en ce que** l'unité de caméra (2) peut être pivotée par un entraînement à broche (7).

5. Dispositif de caméra selon l'une quelconque des revendications 1 à 4, **caractérisé en ce que** l'axe de pivotement (A) s'étend au travers de l'unité de caméra (2).

6. Dispositif de caméra selon l'une quelconque des revendications 1 à 5, **caractérisé en ce que** la chambre (3) est réalisée dans un module de boîtier (8).

7. Dispositif de caméra selon la revendication 6, **caractérisé en ce que** le module de boîtier (8) est fixé sur un clapet ou une porte (9) du véhicule.

8. Dispositif de caméra selon la revendication 6 ou 7, **caractérisé en ce qu'**un dispositif d'actionnement (10) est reçu dans le module de boîtier (8) pour l'actionnement du clapet ou de la porte (9).

9. Dispositif de caméra selon l'une quelconque des revendications 1 à 3, **caractérisé en ce que** le capuchon (4) est fixé par complémentarité de formes sur l'unité de caméra (2).

10. Procédé d'installation d'un dispositif de caméra (1) selon la revendication 1 dans un véhicule, comprenant les étapes suivantes :
- disposer l'unité de caméra (2) pouvant pivoter entre une position active et une position inactive pour la prise d'image dans un module de caméra (8a) ;
- disposer un dispositif d'actionnement (10) pour l'actionnement d'un clapet ou d'une porte (9) du véhicule dans un module d'actionnement (8b) ;
- introduire le module d'actionnement (8b) de l'extérieur dans une ouverture de carrosserie (11) du clapet ou de la porte (9) ;
- disposer le module de caméra (8a) sur le côté intérieur du clapet ou de la porte (9) ;
- relier le module de caméra (8a) et le module d'actionnement (8b) à un module de boîtier (8) ;
- fixer le capuchon (4) sur l'unité de caméra (2).

11. Procédé selon la revendication 10, **caractérisé en ce que** l'unité de caméra (2) est dans la position inactive pour la liaison du module de caméra (8a) au module d'actionnement (8b) et dans la position active pour la fixation du capuchon (4) sur l'unité de caméra (2).
